Europäisches Patentamt

European Patent Office

Office européen des brevets

(19)

(11) EP 0 786 607 A1

## (12) EUROPEAN PATENT APPLICATION

(43) Date of publication:
30.07.1997 Bulletin 1997/31

(51) Int. Cl.⁶: F16F 9/346

(21) Application number: 97101109.3

(22) Date of filing: 24.01.1997

(84) Designated Contracting States:
DE GB

(30) Priority: 29.01.1996 JP 33131/96

(71) Applicant: SHOWA CORPORATION
Gyoda-shi, Saitama (JP)

(72) Inventor: Oyaizu, Hiroshi,
c/o Showa Corporation
Iwata-gun, Shizuoka (JP)

(74) Representative: Casalonga, Axel et al
BUREAU D.A. CASALONGA - JOSSE
Morassistrasse 8
80469 München (DE)

### (54) Gas spring

(57) A gas spring 20 includes a piston 23 with a rod 22 slidably arranged within a cylinder 21, air 25 enclosed within the cylinder for causing a reaction force to move the rod in an extending direction, and a cylinder groove 29 formed axially on the inner surface of the cylinder throughout a stroke range of the piston to cause an extension damping force in the process of extending the gas spring, the gas spring being arranged such that one of the cylinder and the rod is attached to a car body and the other is attached to a door, wherein a sectional area of the cylinder groove in a lifting stroke area X of the cylinder, which corresponds to a lifting section before the reaction force balances with the weight of the door while opening the door through all the opening sections, is set larger than a sectional area of the cylinder groove in a self-rising stroke area Y of the cylinder.

FIG. 1

EP 0 786 607 A1

## Description

This invention relates to a gas spring used in a back door or trunk lid of a four-wheel vehicle or the like.

A four-wheel vehicle generally has back doors or trunk doors or lids (opened and closed member), each capable of opening and closing about a horizontal axis of the car body (body). The back door is connected to the car body through a gas spring so that the force required for opening the back door can be reduced by the reaction force (assisting force) of the gas spring.

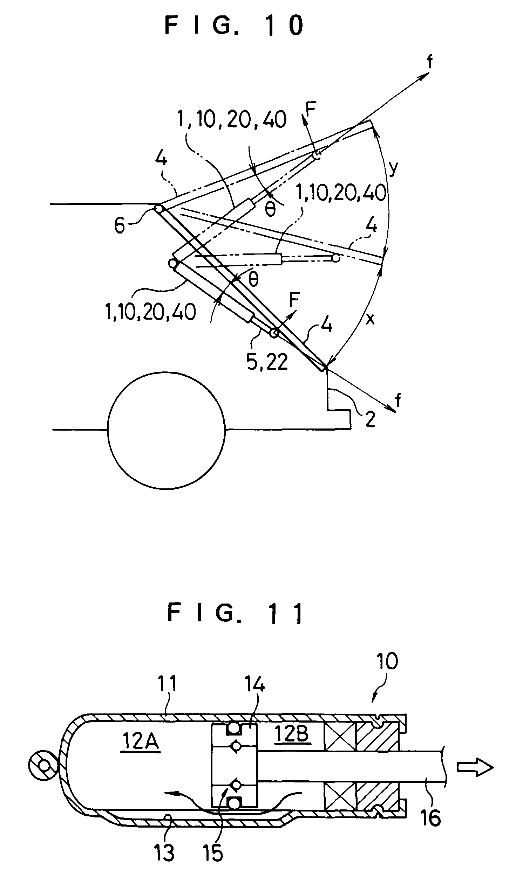

One often used form of gas spring is an inverted gas spring, which has a cylinder at the upper end and a rod at the lower end when the back door is closed. In a gas spring 1 of inverted position turning type shown in Fig. 10, a cylinder 3 is attached to a vehicle body 2 and a rod 5 is attached to a back door 4 so as to position the gas spring 1 at an angle when the back door 4 is closed.

One of such gas springs 1 is disclosed in Japanese Patent Laid-Open Application (JP-A) No. 53-1764, which is designed to improve a damping effect when being fully extended. This type of gas spring 10 is shown in Fig. 11, which includes a cylinder groove 13 in an axial direction for communicating between a piston-side chamber 12A and a rod-side chamber 12B on the inner surface of the cylinder 11.

During compression of the gas spring, an air can flow from the piston-side chamber 12A to the rod-side chamber 12B through the cylinder groove 13 and check valves 15 arranged in piston 14, so that little or no damping force occurs, thereby closing the back door 4 quickly.

In the process of extending the gas spring 10, the check valves 15 of the piston 14 are put into a closed state, whereby air within the rod-side chamber 12B flows into the piston-side chamber 12A only through the cylinder groove 13. For this reason, an extension damping force occurs due to the flow resistance caused when the air passes through the cylinder groove 13. Although in this extension process a reaction force of the air within the piston-side chamber 12A acts on a rod 16 through the piston 14 to move the rod 16 in an extending direction of the gas spring 10, the extension damping force causes the transit speed of the rod 16 in the extending direction (i.e., extension speed of the gas spring 10) to be controlled so that the back door 4 will be raised at proper speed.

When the gas spring 10 has been fully extended, the piston 14 is at a position where the cylinder groove 13 does not define an airlock chamber, thereby providing excellent damping operation when being fully extended.

As shown in Fig. 10, a reaction force f of the gas spring 1 or 10 changes according to the stroke position of the piston 14. Maximum reaction force is obtained at the beginning of the extension process. However, a component F of the reaction force f, i.e., a force required for opening the back door 4 (opening force) is changed with the angle $\theta$ between the door 4 and the gas spring 1 or 10, which is determined by referring to the relation "$F = f \sin \theta$". When a vehicle operator wishes to open the back door 4, since the opening force F caused by the gas spring 1 or 10 becomes smaller than the weight of the door 4 at the beginning of opening the door 4 with a small angle $\theta$, the driver is required to lift up the door 4 manually. Accordingly, the opening speed of the door 4 is also slowed down in this manual lifting section.

The present invention is intended to overcome the above problems, and a primary object is to provide a gas spring capable of speeding up the opening action in the lifting provision of a closable structure. Another object of the present invention is to provide a gas spring capable of speeding up the opening action of a opened and closed member in the latter half of the self-rising stroke, beyond the speed of the first half.

In the present invention, there is provided a gas spring which includes a piston slidably arranged within a cylinder, one end of the cylinder being closed. A rod is fixed to the piston and projects from an opening end of the cylinder. Reaction force applying means provided within the cylinder for causing a reaction force to move the rod in an extending direction. A cylinder groove is formed on the inner surface of the cylinder in an axial direction throughout a stroke range of the piston to cause an extension damping force, the gas spring being arranged such that one of the cylinder and the rod is attached to the vehicle body, and the other is attached to an opened and closed member (a door) provided to be rotatable around a horizontal axis of the body. A sectional area of the cylinder groove in a portion of the stroke range, which corresponds to an opening section before the reaction force balances with the weight of the opened and closed member while opening the open and closed member through all of the opening sections, is set larger than a sectional area of the cylinder groove in the remaining portion of the stroke range.

In the present invention, the remaining portion of the stroke range is further divided into two portions. One portion is provided on the opening end side of the cylinder and has a sectional area over a given range larger than that of the other portion.

The present invention has the following effect.

Since the sectional area of the cylinder groove in a portion of the stroke range of the piston, which corresponds to the opening section (lifting section of the opened and closed member) before the reaction force of the gas spring balances with the weight of the opened and closed member while opening the opened and closed member through all the opening sections, is set larger than a sectional area of the cylinder groove in the remaining portion of the stroke range, it is possible to reduce an extension damping force caused by the cylinder groove in the stroke range of the piston corresponding to the lifting section of the opened and closed member. It is therefore permitted in the process of extending the gas spring to speed up the sliding action of the piston in the stroke range corresponding to the lifting section of the opened and closed member, and hence the opening action of the opened and closed member can be speeded up in the lifting stroke section of the opened and closed member.

The present invention has the following effect.

Since the sectional area of the cylinder groove formed on the opening end side of the cylinder is set to be large over a given range, the reaction force of the gas spring becomes larger than the weight of the opened and closed member. It is therefore allowed in the self-rising section, where the opened and closed member is moved by only the reaction force of the gas spring, to speed up the opening action of the opened and closed member in the latter half, as compared to the first half.

The present invention will be understood more fully from the detailed description given hereinbelow and from the accompanying drawings of the preferred embodiments of the invention, which are given by way of example only, and are not intended to limit the present invention.

In the drawings:

Fig. 1 is a side view showing a part of the first embodiment of a gas spring in a sectional state according to the present invention;
Fig. 2 is a sectional view showing a cylinder of Fig. 1;
Fig. 3 is a sectional view showing a piston of Fig. 1;
Fig. 4 is a section view showing the piston of Fig. 3 as viewed from the direction indicated by the arrow IV;
Fig. 5 is a partial sectional view taken along the plane of line V-V of Fig. 2;
Fig. 6 is a partial sectional view taken along the plane of the line VI-VI of Fig. 2;
Fig. 7 is a sectional view taken along the plane of line VII-VII of Fig. 2;
Fig. 8 is a partial sectional view showing a modified example of the cylinder groove of Fig. 6;
Fig. 9 is a sectional view showing a second embodiment of a gas spring according to the present invention, which is taken along the plane corresponding to that of Fig. 7;
Fig. 10 is a side view showing a back or trunk door of a four-wheel vehicle and its vicinity to which a gas spring is attached; and
Fig. 11 is a sectional view showing a conventional gas spring.

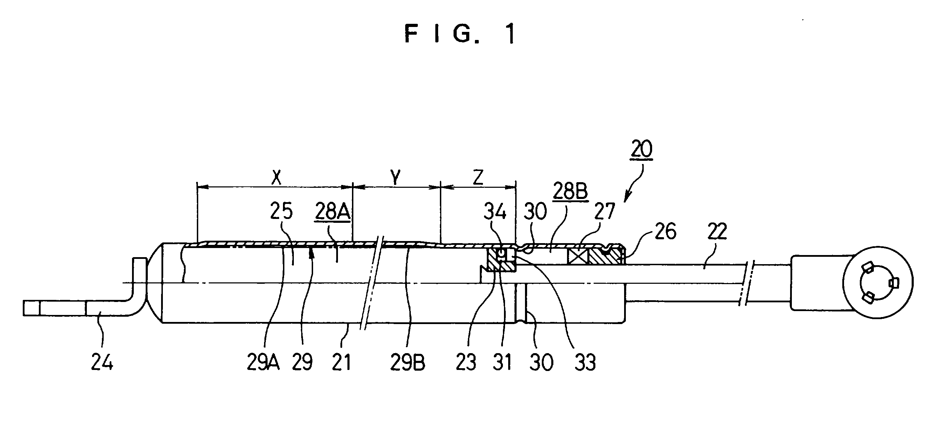

Fig. 1 shows a gas spring 20 used for a door of a four-wheel vehicle and mainly being a gas spring of inverted position turning type. The gas spring 20 has a piston 23 slidably within a cylinder 21, one end of the cylinder 21 being closed and the piston being fixed by applying pressure to one end of a rod 22. A bracket 24 of the cylinder 21 is attached to the car body 2. The other end of the rod 22 is attached to a vehicle back door 4 (as an opened and closed member). The back door 4 rotates around a horizontal axis 6 of the car body 2.

A gas such as nitrogen or air 25 is enclosed within the cylinder 21, and a rod guide 26 and a gas seal 27 are arranged at an opening end of the cylinder 21. The rod guide 26 permits the rod 22 to move as the piston 23 slides through the cylinder 21, while the gas seal 27 prevents leakage of the air 25. A very small amount of oil is also enclosed within the cylinder 21 so that the gas seal 27 can be lubricated sufficiently to maintain good sealing characteristics.

The cylinder 21 is divided by the piston 23 into two sections. One is a rod-side chamber 28B in which the rod 22 is housed. The other is a piston-side chamber 28A in which the rod 22 is not housed. The gas or air 25 is enclosed in both the chambers 28A and 28B. A respective pressure of the air 25 (reaction force) in the piston-side chamber 28A or the rod-side chamber 28B is proportional to a pressure-receiving area of the piston 23. Therefore, the reaction force in the piston-side chamber 28A is larger by a sectional area of the rod 22 than the rod-side chamber 28B. For this reason, the above reaction forces assist to force the rod 22 and the piston 23 in an extending direction of the gas spring 20, i.e., the air 25 serves as reaction force applying means.

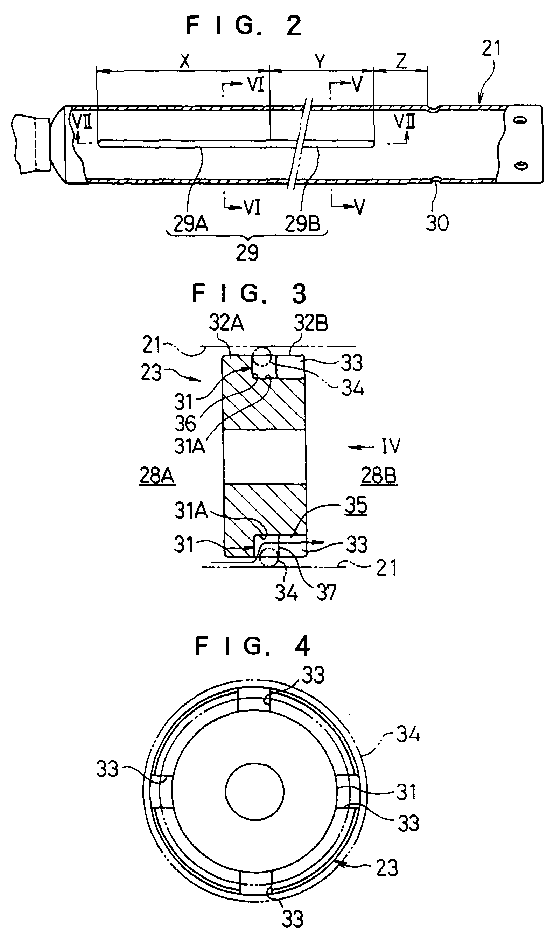

As shown in Figs. 1 and 2, a cylinder groove 29 is formed on the inner surface of the cylinder 21. The cylinder groove 29 is formed by conventional means, for example by externally extending the inner surface of the cylinder 21 by roll forming. In the cylinder 21, a stopper 30 is also provided near the position where the rod guide 26 and the gas seal 27 are located, thereby reducing the diameter of the cylinder 21 centrally. The piston 23 strikes the stopper 30 and stops forward movement under control of the stopper 30. The position of the piston 23 striking the stopper 30 is the extension end of the stroke. The cylinder groove 29 is formed to extend in the axial direction of the cylinder 21 substantially throughout the full range of piston 23 stroke except for an area near the extension end.

One end of the cylinder groove 29, which is a closed-end side of the cylinder 21, extends from the position where an O-ring 34 is located. The O-ring 34 is set in the outer edge of the piston 23 when the gas spring 20 is most compressed. The O-ring 34 divides the cylinder 21 into the chambers 28A and 28B provided at both sides of the piston 23 and communicates between the chambers 28A and 28B through the cylinder groove 29. The cylinder groove 29 may be extended to the closed end of the cylinder 21. In the process of extending the gas spring 20, it becomes possible that an extension damping force occurs due to flow resistance caused when the air 25 flows from the rod-side chamber 28B to the piston-side chamber 28A and passes through the cylinder groove 29.

In the piston 23, as shown in Figs. 3 and 4, an annular groove 31 is formed so that the outer edge of the piston 23 will be divided into a first flange 32A and a second flange 32B. A notch 33 is formed on the second flange 32B so that the annular groove 31 and the rod-side chamber 28B can communicate with each other. In other words, the annular groove 31 is formed between the first flange 32A and a remaining portion of the second flange 32B in which the notch 33 is not formed. The O-ring 34 is then set in the annular groove 31 and serves as an elastic seal member.

The O-ring 34 is in close contact with the inner surface of the cylinder 21 and is set in the annular groove 31 such that a clearance is left between the O-ring 34 and the bottom 31A of the annular groove 31. As a result, a passage 35 is defined through the outer edge of the first flange 32A of the piston 23, the annular groove 31, the notch 33 and the inner surface of the cylinder 21. The O-ring 34 serves as a check valve, which strikes the wall 36 of the first flange 32A to close the passage 35 in the process of extending the gas spring 20, or which strikes the wall 37 of the second flange 32B to open the passage 35 in the process of compressing the gas spring 20.

As shown in Fig. 3, the piston 23 is a solid-core member without any passage or orifice therethrough, and which is made from a porous sintered alloy, such as iron-sintered alloy, for communicating between the piston-side chamber 28A and the rod-side chamber 28B.

As shown in Fig. 10, the door 4 is opened and closed over a range from a position indicated by the solid line to a position indicated by the double-dot-and-dash line. During the opening or closing operation of the door 4, the piston 23 of the gas spring 20 moves in a given stroke area of the cylinder 21. In the opening operation of the door 4, the gas spring 20 is extended due to a reaction force (represented by f in Fig. 10) of the gas spring 20. In this case, a component (opening force F) of the reaction force f to open the door 4 is changed according to the angle $\theta$ between the door 4 and the gas spring 20, which is determined by referring to the relation "$F = f \sin \theta$". Since the angle $\theta$ is small at the beginning of opening the door 4, the opening force F caused by the reaction force f of the gas spring 20 becomes smaller than the weight or the like of the back door 4, and therefore the vehicle operator is required to lift up the back door 4. When the back door 4 is opened above a position indicated by the dot-dash line to make the opening angle $\theta$ large, the opening force F increases gradually against the weight of the door 4, thus raising the door 4 on its own by the reaction force f of the gas spring 20.

As described above, the full opening range of the door 4 is divided into two sections, one is referred to as a lifting section x in which the vehicle operator is required to lift the door 4. The other is referred to as a self-rising section y in which the door 4 is raised on its own by the reaction force f of the gas spring 20. As shown in Figs. 1, 2 and 7, the full stroke range of the piston 23 is also divided into two areas, one is referred to as a lifting stroke area X which corresponds to the lifting section x of the back door 4. The other is referred to as a self-rising stroke area Y which corresponds to the self-rising section y. The cylinder groove 29 is formed in both the lifting stroke area X and the self-rising stroke area Y.

In the full stroke range of the gas spring 20, the remaining area nearby the stopper 30 is defined as an airlock stroke area Z to which the cylinder groove 29 does not occur.

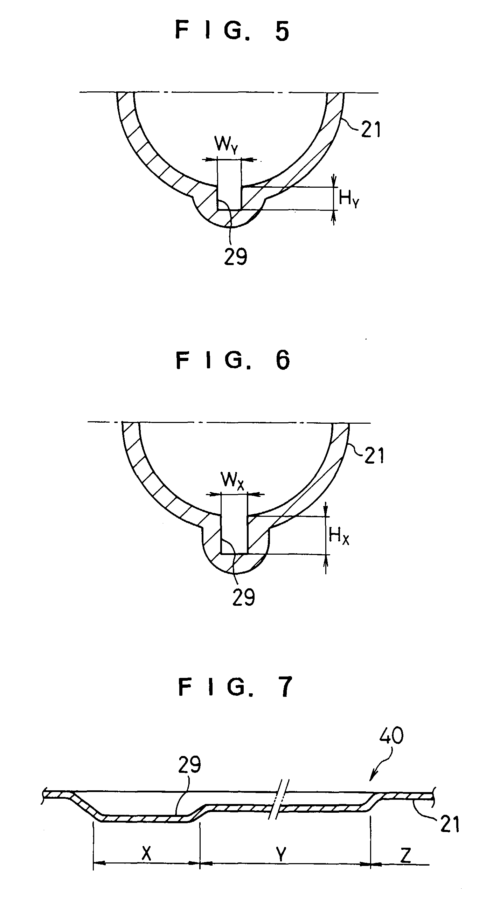

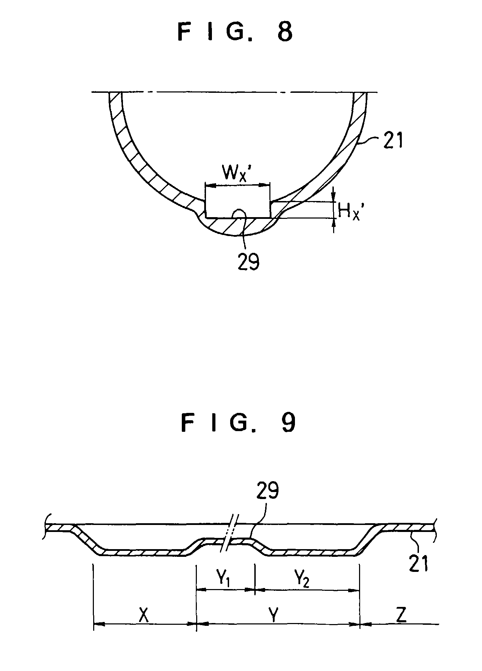

A sectional area of the cylinder groove 29 in the lifting stroke area X is made larger than that in the self-rising stroke area Y. As shown in Figs. 5 and 6, the cylinder groove 29 is a substantially square groove having a substantially square cross section. With the dimensions of the cylinder groove 29, a groove-width $W_X$ of the lifting stroke area X is set substantially equal to a groove-width $W_Y$ of the self-rising stroke area Y, whereas a groove-depth $H_X$ of the lifting stroke area X is set larger than a groove-depth $H_Y$ of the self-rising stroke area Y. Alternatively, as shown in Fig. 8, the dimensions of the cylinder groove 29 may be set such that a groove-depth $H_X'$ of the lifting stroke area X is substantially equal to the groove-depth $H_Y$ of the self-rising stroke section Y and a groove-width $W_X'$ of the lifting stroke area X is larger than the groove-width $W_Y$ of the self-rising stroke area Y.

Next, operation of the gas spring 20 will be described.

When the gas spring 20 is compressed, the O-ring 34 (Fig. 3) surrounding the piston 23 comes closely into contact with a wall surface 37 of the second flange 32B to secure the passage 35, so that the air 25 within the piston-side chamber 28A flows through both the passage 35 and the cylinder groove 29 and into the rod-side chamber 28B. For this reason, little or no damping force occurs in this compression process, and the gas spring 20 will compress quickly and hence close the back door 4 quickly.

When the gas spring 20 is extended, reaction force of the air 25 within the piston-side chamber 28A shown in Fig. 1 acts on the piston 23 and the rod 22 to move them in the extending direction. On the other hand, the O-ring 34 (Fig. 3) on the piston 23 comes closely into contact with a wall surface 36 of the first flange 28A to block the passage 35, so that the air 25 within the rod-side chamber 28B flows into the piston-side chamber 28A through only the cylinder groove 29.

In the process of extending the gas spring 20, when the piston 23 is in the lifting stroke area X, the sectional area of the cylinder groove 29 is large. Although all the air 25 flowing from the rod-side chamber 28B to the piston-side chamber 28A passes through the cylinder groove 29, little or no damping force occurs because of the large sectional area of the cylinder groove 29. For this reason, the reaction force of the air 25 causes the piston 23 and the rod 22 to be moved in the extending direction, i.e., it causes the gas spring 20 to be extended quickly. As a result, the opening speed of the back door 4 increases during the lifting stroke section x.

In the process of extending the gas spring 20, when the piston 23 is in the self-rising stroke area Y, an extension damping force occurs due to flow resistance caused when the air 25 flowing from the rod-side chamber 28B to the piston-side chamber 28A passes through the cylinder groove 29. Therefore, the reaction force of the air 25 exerted to the piston 23 and the rod 22 causes the transit speed (or extension speed of the gas spring 20) to be controlled by the extension damping force, thereby opening the back door 4 at proper speed.

In the process of extending the gas spring 20, when the piston 23 is in the airlock stroke area Z, the piston 23, the cylinder 21, the gas seal 27 and the rod guide 26 define an airlock chamber because the cylinder groove 29 does not occur in this area Z. The air 25 within the airlock chamber flows into the piston-side chamber 28A through open pores of the sintered metal piston 23 to move the piston 23 in the extending direction very slowly, so that the damping of the gas spring 20 is controlled properly when fully extended, thereby stopping the back door 4 in the full open position.

According to the above embodiment, the sectional area of the cylinder groove 29 in the lifting stroke area X of the cylinder 21, which corresponds to the lifting stroke section x before the reaction force of the gas spring 20 balances with the weight of the door 4 while opening the door 4 through all the opening stroke sections, is set to be larger than that of the cylinder groove 29 in the self-rising stroke area Y, so that the extension damping force caused by the cylinder groove 29 in the lifting stroke area X can be reduced, for example, to neatly "0". It is therefore allowed in the process of extending the gas spring 20 to speed up the sliding action of the piston 23 in the lifting stroke area X of the cylinder 21, and hence the opening action of the door 4 in the lifting stroke section x.

Fig. 9 is a sectional view showing a second embodiment of a gas spring according to the present invention, which is taken along the plane corresponding to Fig. 7. In this second embodiment, portions similar to the first embodiment are given the same reference numerals and the descriptions thereof are omitted.

In a gas spring 40 of the second embodiment, the self-rising stroke area Y of the cylinder 21 is further divided into two areas, one is defined as a self-rising stroke speed-up area $Y_2$ which is formed over a given range on the side of the airlock stroke area Z (i.e., on the side of the opening end of the cylinder 21). The remaining area is defined as a self-rising stroke speed-down area $Y_1$.

Although the cylinder groove 29 extending in the axial direction of the cylinder 21 is formed across these self-rising stroke speed-down area $Y_1$ and self-rising stroke speed-up area $Y_2$, the cylinder groove 29 in the self-rising stroke speed-down area $Y_1$ is formed with a sectional area substantially equal to that of the cylinder groove 29 in the self-rising stroke area Y in the first embodiment. The cylinder groove 29 in the self-rising stroke speed-up area $Y_2$ is formed with a sectional area substantially equal to that of the cylinder groove 29 in the lifting stroke area X in the first embodiment. In other words, the cylinder groove 29 in the self-rising stroke speed-up area $Y_2$ is formed with a groove-depth substantially equal to the groove-depth $H_X$ of Fig. 6 or with a groove-width substantially equal to the groove-width $W_X'$ of Fig. 8.

In the case where the gas spring 40 is used for opening door 4, when the door 4 is in the lifting stroke section x, the piston 23 of the gas spring 40 is located in the lifting stroke area X, so that little or no damping force occurs in the cylinder groove 29. It is therefore allowed to increase the extension speed of the gas spring 40, and hence the opening speed of the door 4 in the lifting stroke section x. In the first half of the self-rising stroke section y of the door 4, the piston 23 of the gas spring 40 is in the self-rising stroke speed-down area $Y_1$, so that the extension speed of the gas spring 40 is slowed down under control of the extension damping force caused by the cylinder groove 29, thereby controlling the opening speed of the door 4. In the latter half of the self-rising section y of the back door 4, the piston 23 of the gas spring 40 is in the self-rising stroke speed-up area $Y_2$, so that little or no damping force occurs in the cylinder groove 29. For this reason, the extension speed of the gas spring 40 is made higher than in the case where the piston 23 is in the self-rising stroke speed-down area $Y_1$, and is allowed in the latter half of the self-rising section to increase the opening speed of the door 4 more than in the first half of the self-rising section. After that, the piston 23 enters the airlock stroke area Z to damp the gas spring 40 properly when being fully extended, thereby stopping the door 4 in the full open position.

According to the above embodiment, the sectional area of the cylinder groove 29 in the self-rising stroke speed-up area $Y_2$ of the cylinder 21 is set to be larger than that of the cylinder groove 29 in the self-rising stroke speed-down area $Y_1$, so that, in the self-rising section y, where the back door 4 is opened only by the reaction force of the gas spring 40, the opening speed of the door 4 in the latter half can be increased greater than that in the first half.

Although the above embodiments describe that the reaction force of the air within the piston-side chamber 28A acts on the piston 23 and the rod 22 in the process of extending the gas spring 20 or 40, a coil spring arranged between the closed end of the cylinder 21 and the piston 23 may be used as reaction force applying means so that a force of the coil spring can act on the piston 23 and the rod 22 instead of the reaction force of the air.

Although the above embodiments also described the gas spring 20 or 40 in which the cylinder 21 is attached to the vehicle body 2 and the rod 22 is attached to the door 4, the gas spring 20 or 40 may be designed such that the cylinder 21 is attached to the door 4 and the rod 22 is attached to the body 2.

Although the above embodiments described the gas spring 20 of the inverted position turning type, but the gas spring 20 may also be an inverted force type.

The second embodiment described that the sectional area of the cylinder groove 29 in the self-rising stroke speed-up area $Y_2$ of the cylinder 21 is formed to be substantially equal to the sectional area of the cylinder groove 29 in the lifting stroke area X of the cylinder 21, but it may be formed to be merely larger than the sectional area of the cylinder 29 in the self-rising stroke speed-down area $Y_1$ of the cylinder 21.

The gas spring of the present invention can be used to not only vehicle door but also other lid-structure supporting machine such as in a copy machine.

As described in detail above, according to the invention, there is provided a gas spring capable of speeding up the opening action of the opened and closed member in the lifting section of the opened and closed member. On the other hand, according to the invention, there is provided a gas spring capable of changing the opening speed of the opened and closed member in the self-rising section of the opened and closed member such that the latter half is higher than the first half.

While the preferred embodiments of the invention have been described in detail with reference to the drawings, they are by no means limitative, and various changes and modifications are possible without departing from the scope and spirit of the invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above but to include all possible embodiments which can be embodied within a scope encompassed and equivalents thereof with respect to the feature set out in the appended claims.

**Claims**

1. A gas spring which includes a piston slidably arranged within a cylinder, one end of the cylinder being closed, a rod fixed to the piston and projecting from an opening end of the cylinder, reaction force applying means provided within the cylinder for causing a reaction force to force the rod in an extending direction, and a cylinder groove formed on the inner surface of the cylinder in an axial direction throughout a stroke range of the piston to cause an extension damping force, the gas spring being arranged such that one of the cylinder and the rod is attached to a body and the other is attached to an opened and closed member disposed to be rotatable around a horizontal axis of the body, wherein

   a sectional area of the cylinder groove in a portion of said stroke range, which corresponds to an opening section before said reaction force balances with the weight of said opened and closed member while opening the opened and closed member through all the opening sections, is set larger than a sectional area of said cylinder groove in the remaining portion of said stroke range.

2. The gas spring as set forth in claim 1, wherein the remaining portion of said stroke range is further divided into two portions, one being disposed on the opening end side of said cylinder and having a sectional area over a given range larger than that of the other portion.

3. The gas spring as set forth in claim 1 or 2, wherein said cylinder groove does not extended to the inner surface of said cylinder between the other portion of said stroke range and the opening end.

4. The gas spring as set forth in any one of claim 1 to 3, wherein a passage is formed through said piston to communicate between a rod-side chamber and a piston-side chamber and a check valve is provided for opening the passage only in the compression process.

5. The gas spring as set forth in any one of claims 1 to 4, wherein said reaction force applying means is an air (gas) enclosed within the piston side chamber.

6. The gas spring as set forth in any one of claims 1 to 5, wherein said piston is formed of sintered alloy.

FIG. 1

# F I G. 2

X    Y    Z

21

VI    V

VII    VII

VI    V

29A    29B    30

29

# F I G. 3

32A    32B

21

23

33

34

31

36

31A

IV

28A    28B

31A    35

31

33

34    37    21

# F I G. 4

33

34

33

31

33

23

33

# F I G. 5

# F I G. 6

# F I G. 7

F I G. 8

W_x'

H_x'

21

29

F I G. 9

29

21

Y_1

Y_2

X

Y

Z

# F I G. 1 0

# F I G. 1 1

European Patent
Office

**EUROPEAN SEARCH REPORT**

Application Number

EP 97 10 1109

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,Y | EP 0 724 090 A (SUSPA COMPART AG) 31 July 1996<br>* column 3, paragraph 2; figures * | 1,3-5 | F16F9/346 |
| Y | US 4 595 182 A (H. FREITAG ET AL.)<br>* the whole document * | 1,3-5 | |
| A | FR 1 124 206 A (J.-G. POYET)<br>* the whole document * | 1 | |
| A | FR 2 305 645 A (STABILUS GMBH) 22 October 1976<br>* the whole document * | 2 | |
| A | GB 2 175 375 A (AISIN SEIKI;TOYOTA MOTOR CO LTD) 26 November 1986<br>* abstract * | 6 | |
| A | US 1 650 742 A (J.V. ROWAN) | | |
| A | DE 70 21 330 U (FA. WILLIBALD GRAMMER) 17 September 1970 | | TECHNICAL FIELDS SEARCHED (Int.Cl.6) |
| A | DE 969 377 C (DAIMLER-BENZ) | | F16F |
| A | AUTOMOTIVE ENGINEER,<br>vol. 11, no. 6, December 1986, DMUNDS GB,<br>page 36 XP002030547 "Variable damping at low cost" | | |
| A | REVUE TECHNIQUE AUTOMOBILE,<br>vol. 42, no. 484, October 1987,<br>BOULOGNE-BILLANCOURT FR,<br>page xxvi XP002030548 "Un amortisseur variable Sachs, sans pièces supplémentaires" | | |

The present search report has been drawn up for all claims

| Place of search | Date of completion of the search | Examiner |
|---|---|---|
| THE HAGUE | 7 May 1997 | Pemberton, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)